(19) Europäisches Patentamt
European Patent Office
Office européen des brevets

(11) **EP 4 239 525 A1**

(12) **EUROPEAN PATENT APPLICATION**

(43) Date of publication:
06.09.2023 Bulletin 2023/36

(21) Application number: 22174395.8

(22) Date of filing: 19.05.2022

(51) International Patent Classification (IPC):
*G06N 3/04* (2023.01)        *G06N 3/08* (2023.01)

(52) Cooperative Patent Classification (CPC):
G06N 3/084; G06N 3/045

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.03.2022 US 202217686263

(71) Applicant: NavInfo Europe B.V.
5657 DB Eindhoven (NL)

(72) Inventors:
• SARFRAZ, Fahad
5657 DB Eindhoven (NL)
• ARANI, Elahe
5657 DB Eindhoven (NL)
• ZONOOZ, Bahram
5657 DB Eindhoven (NL)

(74) Representative: van Breda, Jacobus et al
Octrooibureau Los & Stigter B.V.
P.O. Box 20052
1000 HB Amsterdam (NL)

(54) **A COMPUTER-IMPLEMENTED METHOD OF SYNAPTIC CONSOLIDATION AND EXPERIENCE REPLAY IN A DUAL MEMORY ARCHITECTURE**

(57) A computer-implemented method of synaptic consolidation for training a neural network using an episodic memory, and a semantic memory, wherein said method comprises the step of: using a Fisher information matrix for estimating the importance of each synapse in the network to previous tasks of the neural network; evaluating the Fisher information matrix on the episodic memory using the semantic memory; adjusting the importance estimate such that functional integrity of the filters in the convolutional layers is maintained whereby the importance of each filter is given by the mean importance of its parameters; Using the weights of the semantic memory as the anchor parameters for constraining an update of the synapses of the network based on the adjusted importance estimate; Updating the semantic memory and fisher information matrix stochastically using exponential moving average, and interleaving samples from a current task with samples from the episodic memory for performing the training.

## Description

The invention relates to a computer-implemented method of synaptic consolidation for training a neural network using experience replay in a dual memory architecture.

A major challenge towards achieving general intelligence and making deep neural networks (DNNs) suitable for deployment in an ever-changing environment is the ability to continuously acquire and consolidate knowledge. DNNs exhibit catastrophic forgetting whereby the network's performance on previously learned tasks drops drastically as they learn a new task. In the brain, efficient lifelong learning is mediated by a rich set of neurophysiological mechanisms and multiple memory systems. Catastrophic forgetting in DNNs can be majorly attributed to the violation of the strong Independent and identically distributed assumption, underpinning the success of standard DNNs training, in the sequential learning of tasks involved in continual learning. Furthermore, catastrophic forgetting is also considered as an inevitable consequence of connectionist models as all the weights of the network are updated to learn a task, overwriting the important weights for the previous tasks. In addition to addressing the above-mentioned challenges, an efficient Continual learning (CL) method needs to maintain a delicate balance between the plasticity and stability of the model. The model should have enough plasticity to adapt to the new data while being stable enough to not forget the previously acquired knowledge.

Several approaches have been proposed to address the issue of catastrophic forgetting in CL. These can be broadly categorized into three categories.

Regularization-based methods[1, 2, 3, 4] draw inspiration from synaptic consolidation in brain to propose algorithms which controls the rate of learning on model weights based on how important they are to previously seen tasks. Elastic Weight Consolidation (EWC) [2] slows down learning on a subset of network weights which are identified as important for previous tasks, thereby anchoring these parameters to previously found solutions by constraining the identified important parameters to remain close to the optimal parameters for previous tasks. EWC tries to keep the network parameters close to the learned parameters of all the previous tasks by maintaining the learned parameters and corresponding Fisher information matrices for each task to enforce separate penalty terms for each. This however, over-constrains the network updates and makes the computational and memory cost linear in the number of tasks. Online EWC[18] and EWC++[19] relaxes this constraint by applying Laplace approximation to the whole posterior whereby the Gaussian approximation of previous task likelihoods are "re-centered" at the latest MAP parameter and a running sum of the Fishers. While regularization approaches constitute a promising direction, they alone fail to enable effective continual learning in DNNs and fail to avoid catastrophic forgetting in more challenging CL settings e.g. Class Incremental learning (Class-IL) whereby in each task a new set of disjoint classes are added. Additionally they require task boundary and/or task label information which limits their application in the more realistic general incremental learning setting (GIL) where task boundaries are not discrete

Network expansion-based methods [5, 6] dedicate a distinct set of network parameters to distinct tasks. However, they fail to scale to longer sequences as the network grows linearly with the number of tasks.

Rehearsal-based approaches[7, 8, 9, 10, 11, 12, 13, 14] on the other hand, are inspired by the critical role that the replay of past neural activation patterns in the brain plays in memory formation, consolidation, and retrieval. Experience Replay[10] typically involves storing a subset of samples from previous tasks and mixing them with data from the new task to update the model parameters with an approximate joint distribution and have proven to be effective in reducing catastrophic forgetting under challenging CL setting[15]. Several techniques have since been employed on top of ER to efficiently utilize the memory samples. In particular, Dark Experience Replay (DER++)[14] samples logits during the entire optimization trajectory and adds the consistency loss to regularize the model update. A limitation of experience replay methods is that the memories being stored and replayed needs to be proportional to the number of tasks as for a fixed buffer size, the representation of earlier tasks in memory diminishes as we learn over longer sequences. Furthermore, an optimal mechanism for replay is still an open question[20].

Complementary Learning Systems theory has further inspired dual memory learning systems. Nitin Kamra et al. [23] Utilizes two generative models. So called CLS-ER[22], also known as complementary learning systems with experience replay, mimic the rapid and slow learning in CLS by maintaining long-term and short-term semantic memories which aggregates the weights of the model at different rates and interact with the episodic memory for efficient replay. These works demonstrate the effectiveness of multiple memory systems.

While all these approaches have their merits and demerits and individually constitute a viable direction for enabling efficient continual learning in DNNs, research has been predominantly orthogonal.

Accordingly, there is a need to enable efficient continual learning using both experience replay in a dual memory system and synaptic consolidation in a manner that does not utilize the task boundaries and is suitable for general continual learning. The present invention aims to satisfy this need.

## DESCRIPTION OF THE INVENTION

The present inventions proposes to employ synaptic consolidation, experience replay and multiple memory systems in a single system in order to improve on the prior art.

According to a first aspect of the invention there is provided a computer-implemented method of synaptic consolidation for training a neural network, also known as a working model, using an episodic memory, and a semantic memory. An episodic memory is here an instance-based memory buffer of previous tasks that is updated with current tasks at the expense of samples of previous tasks. The semantic memory is an exponential weighted averaged model of working model's weights. The method comprises the step of using a Fisher information matrix for estimating the importance of each synapse in the network to previous tasks of the neural network. For reference information it is provided that in mathematical statistics, the Fisher information is a way of measuring the amount of information that an observable random variable X carries about an unknown parameter $\theta$ of a distribution that models X. The Fisher information matrix is used to calculate the covariance matrices associated with maximum-likelihood estimates. The method further comprises the step of evaluating, that is to say finding an expression for, the Fisher information matrix using the semantic memory on the samples in the episodic memory and aggregated the fisher information matrices stochastically throughout the training trajectory. In this manner the importance of a synapse is checked against all of the previously encountered tasks instead of just against a current task, which may bias the importance parameters to the current task The method adjusts the importance estimate such that functional integrity of the filters in the convolutional layers is maintained whereby the importance of each filter is given by the mean importance of its parameters. The method further comprises of constraining the update of the working model by penalizing changes in the weights of the important parameters given by the adjusted fisher information matrix from the parameter values in the semantic memory, thereby acting as an anchor for the network update In order to reinforce learned tasks the method further comprises interleaving samples from a current task with samples from the episodic memory for performing the training. That is to say, produce a concatenated current task and memory batch for the training.

Further to the above the semantic memory can be considered to interact with the episodic memory so as to enforce consistency regularization on each model update whereby the model is encouraged to match the output logits of the semantic memory.

Furthermore, to employ synaptic consolidation, the method estimates the importance of each filter using adjusted Fisher information matrix which takes into account the functional integrity of the filter unit and anchors the parameters of the method to the semantic memory. Preferably, also separate from the above the invention method does not utilize any task boundaries. The invention therefore constitutes an efficient general incremental learning that efficiently employs synaptic consolidation and a dual memory-based replay mechanism that achieves high end performance across challenging CL scenarios. In other words, the method can exclude the use of task boundaries and instead updates the Fisher information matrix stochastically to improve performance.

Optionally, the learned weights of the synapses of the network are updated to an overall loss function. The loss function in method quantifies the difference between the expected outcome and the outcome produced by the working model, in other words the neural network. The overall loss function for updating the working model comprises of three components, namely: i) a standard cross-entropy loss, LCE, on the concatenated task and memory batch, ii) a consistency loss between logits of the working model and the sematic memory on the samples of previous tasks; and iii) a synaptic consolidation. The overall loss used to update the working model is then given by the weighted sum of individual losses i), ii) and iii).

Optionally, the step of evaluating the Fisher information matrix comprises using an exponential moving average to aggregate the Fisher matrix throughout the training.

Optionally, to maintain the structural functionality of filters in the convolutional layers, the method adjusts the importance estimate such that the importance is defined at a filter level instead of its individual parameters. Method uses use the mean of the channel parameters in the aggregated fisher information matrix to estimate the importance of a filter

## DETAILED DESCRIPTION

Similar to the brain, the present invention aims to incorporate synaptic consolidation and experience replay in a dual memory general continual learning method. The key premises is that these mechanisms are complementary and can together overcome the shortcomings of each approach alone to enable effective and efficient continual learning in artificial neural networks (ANNs). The main components of the method are:

• **Multiple Memories.**

Replay of past neural activation patterns in the brain is considered to play a critical role in memory formation, consolidation and retrieval [24,25] CLS-theory further provides a framework to explain how replay is effectively used to incorporate new experiences encoded by a rapid instance based system (Hippocampus) to structured knowledge representation in a slow parametric system (Neocortex) to concurrently learn efficient representations for generalization and the specifics of instance-based episodic memories. Inspired by these studies, the presented method employs an instance based memory system and a semantic memory which maintains consolidated structured knowledge across the learned tasks.

1. Episodic Memory:

To replay samples from the previous tasks, an episodic memory buffer is utilized, M with fixed budget B, as an instance based memory system which can be thought of as a very primitive hippocampus, permitting a form of complementary learning[26]. As the present example focusses on general incremental learning (GIL), reservoir sampling[27] is employed to maintain the memory buffer, which explicitly does not utilize the task boundaries to select the memory samples. Instead the method attempts to approximately match the distribution of the incoming stream by assigning equal probability to each sample for being added to the buffer by replacing a random sample in the buffer. While reservoir sampling is simple, effective and suitable for general incremental learning, any other method for memory selection and retrieval can alternatively also be employed in the method.

2. Semantic Memory:

The acquired knowledge of the tasks in DNNs is represented in the learned weights [2,28]. Therefore, it is an aim to progressively accumulate and consolidate knowledge across the tasks encoded in the subsequently learned weights of the working model, $\theta w$ throughout the training trajectory. To this end, one can maintain the semantic memory by taking the exponential moving average of the working model as it provides an efficient approach for aggregating weights.

$$\theta_S = \alpha\theta_S + (1 - \alpha)\,\theta_W, \quad if \; r_S > \mathcal{U}(0,1)$$

*Equation 1:* Eq.1 in Algorithm 1;

*Equation 1\*:* Eq.1 in Algorithm 1\*

where $\alpha$ is the decay parameter and $r_s$ is the update probability. As the semantic memory is designed to stochastically accumulate knowledge across the entire training trajectory by aggregating the weights of the working model, it can also be considered as an ensemble of several student models with varying degrees of specialization for different tasks. The semantic memory here loosely mimics the Neocortex as it constitutes a parametric memory system for generalization that interacts with the instance level episodic memory to efficiently accumulate and consolidate knowledge.

• **Synaptic Consolidation**

In the brain, synaptic consolidation supports continual learning by reducing the plasticity of synapses that are considered important to previously learned tasks. This is enabled by complex molecular machinery in biological synapses that allows multiple scales of learning by mediating the plasticity of individual synapses [21, 29]. In ANNs, on the other hand, synapses are only described by a scalar value, and employing synaptic consolidation requires an additional estimate of the importance of each synapse to the previous tasks. To this end, one can utilize the Fisher information matrix to estimate the importance of each parameter. In this example one can maintain a running approximation of the Fisher information matrix but make several modifications to make the algorithm suitable for GIL and enable efficient consolidation of information across the tasks. Concretely, our method does not utilize the task boundaries and instead updates the fisher information matrix stochastically using an updated probability. Furthermore, in order to avoid the parameter importance update from being biased towards the current task, instead of using the training data of the current task, one can use the samples in the memory buffer to calculate the Fisher information matrix. Since reservoir samples attempt to approximate the joint distribution of incoming stream, this provides a better estimate of parameter importance for all the tasks seen so far and therefore more optimal constraints for the model update. Additionally, it is noted that one shortcoming of the regularization-based approaches is that they do not consider the structural functionality of filters in the convolutions neural networks. Each filter consists of a unit that extracts a specific feature from the input, therefore allowing large changes in some parameters of the filter while penalizing changes in others fail to prevent drift in the functionality of the filter unit which might be important for the previous tasks. For instance, a horizontal edge detector requires each parameter of the filter to have certain values and changes in even a few parameters change the functionality of the filter. To address this shortcoming, we modify the fisher information matrix such that a uniform penalty is applied to each parameter of a filter. Specifically, for applying the penalty term, for each filter in the convolutional layer, we calculate the mean importance value and assign it to each parameter of the filter in the adjusted fisher information matrix, Fadj.

List of major contributions for synaptic consolidation:

- We do not utilize the task boundaries and instead update the running estimate of FIM throughout the training trajectory stochastically using an update probability.
- Instead of evaluating the FIM on the training data of the current task, we use the samples in the memory buffer as they approximate the joint distribution of all the seen tasks. This provides a better estimate of the importance of a parameter for all the tasks and avoids the update from biasing the running estimate towards the current task.

- As the semantic memory effectively consolidates information across the tasks, and provides a better estimate of the optimal parameters for the joint distribution of tasks seen so far, we use it to evaluate the FIM instead of the working model.
- Subsequently, the working model weights are anchored to the important parameters of the semantic memory. Since the synaptic regularization term acts as a proxy for the gradients of the previous tasks, the consolidated weights of the semantic memory can provide a better estimate and more optimal constraints for the working model update. The use of semantic memory as anchor parameters has the additional benefits of not requiring to save the model's state which saves memory and not over constraining the model by anchoring it to parameters at the task boundary which may be unreliable and may hamper consolidation of information.
- Finally, we note that one shortcoming of the regularization-based approaches is that they do not consider the structural functionality of filters in the CNNs. Each filter consists of a unit that extracts a specific feature from the input. Therefore, allowing large changes in some parameters of the filter while penalizing changes in others fails to prevent a drift in the functionality of the filter unit which might be important for the previous tasks. For instance, a horizontal edge detector requires each parameter of the filter to have certain values and changes in even a few parameters changes the functionality of the filter. To address this, we modify the FIM such that a uniform penalty is applied to all parameters of a filter. Specifically, we adjust the FIM for penalizing the weight changes such that the importance of each filter in the convolutional layer is given by the mean importance value of its parameters.

**Formulation:** SYNERgy employs a dual memory experience replay mechanism in conjuction with synaptic consolidation. It involves maintaining multiple memory systems: A fixed episodic memory M with budget size B which is maintained through reservoir sampling and an additional semantic memory $\theta$s which aggregates the weights of the working model $\theta$w by taking an exponential moving average of its weights using Equation 4. While training, samples from the current task, (Xt, Yt) ~ $D_t$, are interleaved with a random batch from the memory buffer, (X$_m$, Y$_m$) ~ M. The overall loss function for updating the working model comprises of three components:

1) **Supervised Loss:** consists of the standard cross-entropy loss, $\mathcal{L}_{CE}$, or $\mathcal{L}_{sl}$ on the concatenated task and memory batch, (X, Y ) $\leftarrow$ Concat(Xt, Xm), Concat(Yt, Ym). This is shown in Algorithm 1. This ensures that the model learns from the approximate joint distribution of all the tasks seen so far. Additionally or alternatively supervised loss consists of learning from the ground truth labels of the incoming stream and the memory buffer samples through the task loss, $\mathcal{L}_t$, and episodic replay loss, $\mathcal{L}_{er}$. This ensures that the model learns from the approximate joint distribution of all the tasks seen so far.

$$\mathcal{L}_{sl} = \mathcal{L}_t(f(x_b; \theta_w, y_b)) + \mathcal{L}_{er}(f(x_m; \theta_w, y_m))$$

$$Equation\ 2^*,\ Eq.2\ in\ Algorithm\ 1^*$$

In this alternative example we use the standard Cross-Entropy loss for object recognition for both the task and episodic replay losses. Cross entropy loss is given by:

$$-\sum_{i=1}^{\substack{output \\ size}} y_i \cdot \log \hat{y}_i$$

Where

$$\mathcal{Y}_i$$

is the ith index of the ground-truth one hot encoded vector and

$$\hat{y}_i$$

is the ith index of the output softmax probablity.

**2) Consistency Regularization:** To replay the neural activation patterns that accompanied the learning event, we utilize the semantic memory to extract the consolidated logits for efficient replay of the memory samples. As the semantic memory aggregates information across the tasks, it takes into account the required adaptations in the decision boundary and the feature space to provide consolidated logits for replay which facilitates consolidation of knowledge. Concretely, we apply a consistency loss between the logits of the working model and the sematic memory on the memory samples.

$$\mathcal{L}_{CR} = \mathcal{L}_{MSE}(f(X_m; \theta_W), f(X_m; \theta_S))$$

Equation 2

Where LMSE is the mean squared error.

Alternatively or additionally to provide additional structural information about the previous tasks, we utilize the semantic memory to extract the consolidated logits for effective replay of the memory samples. As the semantic memory aggregates information across the tasks, it takes into account the required adaptations in the decision boundary and the feature space to provide consolidated logits for replay, which facilitates the consolidation of knowledge. Therefore, we apply semantic replay between the logits of the working model and the semantic memory on the memory samples, which encourages the model to maintain the similarity structure between the classes.

$$\mathcal{L}_{sr} = \mathbb{E}_{x_m \sim M}[(f(x_m; \theta_w) - f(x_m; \theta_s))^2].$$

Equation 3*: Eq.3 in Algorithm 1*

**3) Synaptic Consolidation:** To incorporate synaptic consolidation in our method, we utilize the Empirical Fisher Information Matrix F to estimate the importance of each parameter for the previous task. We apply Laplace approximation to the entire posterior and replace the mean with the latest MAP parameters and aggregated Fisher information matrix. We make several modifications to the approach to improve the parameter importance estimate and make the method suitable for general incremental learning as the current approaches utilize the task boundaries which limits their application in the GIL setting. Notably, at task t, we use the memory buffer M to approximate the expectation over the joint distribution of tasks seen so far (D1 **U.. U** Dt) which gives a better estimate of parameter importance for all the tasks instead of the usual approach of calculating F on the current task's training data which can bias the parameter's importance estimate to the current task. Furthermore, we use the semantic memory, $\theta_S$, to evaluate F and consequently as an anchor for constraining the network update as it effectively consolidates information across the tasks, and can therefore provide a better estimate of optimal MAP parameters for the tasks.

$$\mathcal{F}_{\theta_S} = \mathbb{E}_{(x,y) \sim \mathcal{M}}\left[\left(\frac{\partial \log p_{\theta_S}(y|x)}{\partial \theta_S}\right)\left(\frac{\partial \log p_{\theta_S}(y|x)}{\partial \theta_S}\right)^T\right]$$

Equation 3: Eq.3 in Algorithm 1;
Equation 4*: Eq.4 in Algorithm 1*

Since our focus is on GIL, we want to avoid utilizing the task boundaries to calculate F and save the model's state as anchor parameters. Instead, we take a stochastic approach to evaluate the Fisher information matrix and use an exponential moving average to aggregate F throughout the training trajectory instead of only at the task boundaries.

$$\mathcal{F}_{\theta_S}^* = \alpha_F \mathcal{F}_{\theta_S}^* + (1 - \alpha_F) \mathcal{F}_t, \quad if \ r_F > \mathcal{U}(0, 1)$$

*Equation 4: Eq 4 in Algorithm 1;*

*Equation 5\*: Eq.5 in Algorithm 1\**

Where $\alpha_F$ is the decay parameter which controls the strength of update and $r_F$ is the rate of update.

Furthermore, to maintain the structural functionality of filters in CNNs , we adjust the importance estimate such that importance is defined at a filter level instead of its individual parameters. We use the mean of the channel parameters in the aggregated fisher information matrix to estimate the importance of a filter. The synaptic consolidation loss is then given by the quadratic penalty weighted by the adjusted fisher information matrix.

$$\mathcal{L}_{sc} = \| \theta_W - \theta_S \|_{\mathcal{F}_{adj}}^2$$

*Equation 5*

*Equation 6\*: Eq.6 in Algorithm 1\**

Overall Loss: The overall loss used to update the working model $\theta_W$ is then given by the weighted sum of individual losses.

$$\mathcal{L} = \mathcal{L}_{ce} + \lambda_{CR} \mathcal{L}_{CR} + \lambda_{sc} \mathcal{L}_{sc}$$

*Equation 6*

Where $\lambda_{CR}$ and $\lambda_{SC}$ controls the strength of consistency loss and synaptic consolidation respectively. Further details of the method are given in Algorithm 1. Note that for inference we use the semantic memory as it learns consolidated features that can generalize across the tasks.

An alternative notation may be seen in equation 7\*. Where $\lambda$ and $\beta$ control the strength of consistency loss and synaptic consolidation respectively, both being penalty terms. Further details of the method are given in Algorithm 1. Note that for inference we use the semantic memory as it learns consolidated features that can generalize across the tasks.

$$\mathcal{L} = \mathcal{L}_{sl} + \lambda \mathcal{L}_{sr} + \beta \mathcal{L}_{sc}$$

*Equation 7\*: Eq.7 in Algorithm 1\**

In one example a program is provided in accordance with Algorithm 1:

**Algorithm 1** Synaptic Consolidation with Experience Replay **Input:** Data stream $\mathcal{D}$ , Learning rate $\eta$, regularization strengths $\lambda_{CR}$ and $\lambda_{SC}$, Update rates $r_S$ and $r_F$, Decay parameters $\alpha_S$ and $\alpha_F$ **Initialize:** $\theta_S = \theta_W$ $\mathcal{M} \leftarrow \{\}$

1: **while** Training **do**

2: $(X_b, Y_b) \sim \mathcal{D}$

3: $(X_m, Y_m) \sim \mathcal{M}$

4: $(X, Y) = \{(X_b, Y_b), (X_m, Y_m)\}$

5: $Z_S \leftarrow f(X_m; \theta_S)$

6: Adjust Fisher Information Matrix, $\mathcal{F}_{adj}$

$$7: \quad \mathcal{L} = \mathcal{L}_{CE}\left(\sigma\left(f(X;\theta_W)\right),Y\right) + \lambda_{CR}\mathcal{L}_{MSE}\left(f(X_m;\theta_W),Z\right) + \lambda_{SC}\|\theta_W - \theta_S\|_{\mathcal{F}_{adj}}^2$$

8: $\theta_W \leftarrow \theta_W - \eta\nabla_{\theta_W}\mathcal{L}$

9: $a, b \sim U(0,1)$

10: Update Semantic Model, $\theta_S$, with Eq 1 if $a < r_S$

11: Evaluate Fisher Information Matrix $\mathcal{F}$ with Eq 3 and update the aggregated Fisher Information Matrix $\mathcal{F}^*$ with Eq. 4 if $b < r_F$

12: $\mathcal{M} \leftarrow Reservoir(M, (X_b, Y_b))$

**return** $\theta_W, \theta_S$

Algorithm 1 describes:

A computer-implemented method of synaptic consolidation during the training of a neural network using an episodic memory, and a semantic memory, wherein said method comprises the step of:

**Line 2)** obtaining a data stream $\mathcal{D}$ comprising neural network input ($X_b$) and corresponding label($Y_b$) ;

**Line 3 and 4)** form a concatenated set of task samples ($X, Y$) using samples of the data stream ($X_b, Y_b$) with previous samples from the episodic memory ($X_m, Y_m$)

**Line 5)** extracting the replay logits $Z_S$ for the previous samples $X_m$ from the episodic memory $\mathcal{M}$ using the semantic memory $\theta_S$, wherein the semantic memory is the exponential moving average of the weights of the neural network $\theta_W$,

**Line 6)** adjusting a Fisher Information Matrix, which comprises estimating the importance of each synapse in the network using a Fisher information matrix in the first place, wherein the Fisher information matrix is evaluated using the semantic memory, and wherein the Fisher information matrix isa aggregated over time using an exponential moving average;

**Line 7)** determining an overall loss function;

**Line 8)** updating the weights of the synapses of the neural network using the overall loss function.

Further lines are optional

**Line 9)** generate values a and b, such as at random, each between 0 and 1;

**Line 10)** Update the semantic memory, $\theta_S$, with Eq 1 if a $\alpha < r_S$;

**Line 11)** Evaluate the Fisher Information Matrix $\mathcal{F}$ with Eq 3 and update the Fisher Information Matrix, $\mathcal{F}$ , with Eq 4 if $b < r_F$

**Line 12)** Add the input sample ($X_b$) and corresponding label ($Y_b$) from the data stream to the episodic memory $\mathcal{M}$ , and remove an equal amount of older samples from the episodic memory $\mathcal{M}$ at random.

In yet another example a program is provided in accordance with Algorithm 1*:

**Algorithm 1$^*$** for general continual learning

**Input:** Data stream $\mathcal{D}$ , Learning rate $\eta$, penalty terms $\lambda$ and $\beta$, Update rates $r_S$ and $r_F$, Decay parameters $\alpha_S$ and $\alpha_F$

**Initialize:** $\theta_S = \theta_W$

**M ← {}**

1: **while** Training do

2: Sample date: $(X_b, Y_b) \sim \mathcal{D}$ and $(X_m, Y_m) \sim \mathcal{M}$

3: Calculate adjusted Fisher information matrix: $\mathcal{F}_{adj}$

4: Calculate loss: $\mathcal{L} = \mathcal{L}_{sl} + \lambda\mathcal{L}_{sr} + \beta\mathcal{L}_{sc}$ (Eqs* . 2, 3, 6 & 7)

5: Update working model: $\theta_W \leftarrow \theta_W - \eta\nabla_{\theta_W}\mathcal{L}$

6: Update semantic memory: $\theta_S \leftarrow \alpha_S\theta_S + (1 - \alpha_S)\theta_W$, if $r_S > a \sim U(0, 1)$ (Eq*. 1)

7: Update Fisher information matrix: $\mathcal{F}^*_{\theta_S} \leftarrow \alpha_F\mathcal{F}^*_{\theta_S} + (1 - \alpha_F)\mathcal{F}_{\theta_S}$, if $r_F > \alpha \sim U(0, 1)$ (Eqs*. 4 & 5)

8: Update episodic memory: $\mathcal{M} \leftarrow Reservoir(\mathcal{M},(X_b,Y_b))$
**return** $\theta_W$, $\theta_S$

In this example, the actions of each line are already provided therein and need no further elaboration.

Algorithm 1 and 1' here are an example of the implementation of claim 1.

It is noted that the computer-implemented method may also comprise the step of providing a data stream from a vehicle, such as comprising a live feed of images, to the network via the associated filters, and wherein outputs of the neural network are used as driver responses for autonomously piloting said vehicle. An output may be a label that corresponds to a task. This would allow enable memory replay to occur simultaneously with the piloting as well as learning from newly encountered situations. Which has never been attempted before. In so called 'learning while driving' scenarios catastrophic forgetting is to be avoided at all costs. The data stream may comprise more than just images, but may also comprise other sensor information from the vehicle, such as relating to velocity which may be processed by the network alongside the live feed of images. According to another aspect of the invention an autonomous driving system, such as a vehicle, is provided. Said system comprises at least one camera designed for providing a feed of images, also known as a data stream, and a computer designed for implementing the method as described herein above. The system is designed for using said feed of images for training the neural network, such as while driving, and wherein the network is designed for outputting driver responses for piloting the system in response to the feed of images. The output may also be used together with the driver responses of an active driver of the system to yield partially autonomous driving. An active driver here is the user of the system.

According to yet another aspect of the invention the method as described herein above, such as algorithm 1, is provided as a program for being executed by a computer.

To enable virtual testing, yet another aspect of the invention is provided, as a computer-implemented simulation of autonomous driving of a vehicle on a road, the method comprising:

- providing a data stream, such as a live feed of images, associated with said vehicle;
- applying the method according to any one of claims 1-8, wherein the data stream is provided to the neural network and associated filters; and
- simulating a driver response to the data stream using outputs of said network.

This enables the system to be trained or tested in a virtual environment. The data stream may be provided from said virtual environment and reflect the perspective of the vehicle or be a real-world data stream.

Accordingly there is provided herein a computer-implemented method of synaptic consolidation for training a neural network using an episodic memory, and a semantic memory, wherein said method comprises the step of: using a Fisher information matrix for estimating the importance of each synapse in the network to previous tasks of the neural network; evaluating the Fisher information matrix on the episodic memory using the semantic memory; adjusting the importance estimate such that functional integrity of the filters in the convolutional layers is maintained whereby the importance of each filter is given by the mean importance of its parameters; Using the weights of the semantic memory as the anchor parameters for constraining an update of the synapses of the network based on the adjusted importance estimate; Updating the semantic memory and fisher information matrix stochastically using exponential moving average, and interleaving samples from a current task with samples from the episodic memory for performing the training.

Lastly, it is pointed out that the method according to claim 1, and all dependent claims, may be emphasized or expanded with the following features, the step of:

using a memory buffer as it beneficially approximates the joint distribution of all the seen tasks and does not bias estimates towards the current task. This is as opposed to using current task training data (only), the latter being a known approach;
evaluating the Fisher Information Matrix on the semantic memory as it beneficially consolidates information across the tasks, and provides a better estimate of the optimal parameters for the joint distribution of tasks seen so far. This is as opposed to evaluating the Fisher Information Matrix on the working model, which is commonly in literature; anchoring, instead of the known anchoring of the parameters of the working model to the saved checkpoint at the task boundary the method anchors them to the semantic memory. The parameters may also separately from this example comprise filter parameters. Beneficially, since the synaptic regularization term acts as a proxy for the gradients of the previous tasks, the consolidated weights of the semantic memory can provide a better estimate and more optimal constraints for the working model update.

The method is the first formulation of synaptic consolidation that does not require task boundaries for its proper function and is simultaneously suitable for general incremental learning. The invention does not utilize the task boundaries, that is to say it excludes the use of task boundaries. On top of this exclusion the method updates a running estimate of Fisher information matrix (FIM) throughout the training stochastically using an update probability. Such update probability may comprise the use of update rates, such as $r_S$ and $r_F$, and decay parameters, such as $\alpha_S$ and $\alpha_F$.

In the below table 1 the results of an ablations study are shown supporting the improved accuracy of the method according to claim 1 using training data. Herein the method and its various embodiments are take up the first three lines of the table.

|  | DM | TB | SC | Accuracy |
|---|---|---|---|---|
| SYNERgy | ✓ | ✗ | $\mathcal{M}, \mathcal{F}_{\theta_s}^{adj}$ | $\mathbf{73.85}_{\pm 0.73}$ |
| $-\mathcal{F}_{adj}$ | ✓ | ✗ | $\mathcal{M}, \mathcal{F}_{\theta_s}^{*}$ | $72.88_{\pm 1.63}$ |
| $-\mathcal{M}, \theta_S$ | ✓ | ✗ | $\mathcal{D}_t, \mathcal{F}_{\theta_w}^{adj}$ | $72.26_{\pm 0.82}$ |
| Mean-ER | ✓ | ✗ | ✗ | $71.99_{\pm 1.26}$ |
| + oEWC | ✓ | ✓ | $\mathcal{D}_t, \mathcal{F}_{\theta_w}^{*}$ | $67.73_{\pm 1.37}$ |
| ER | ✗ | ✗ | ✗ | $57.74_{\pm 0.27}$ |

*Table 1: ablation study*

In the ablation study DB and TB denote the usage of dual memory and task boundary information for training respectively. SC indicates which samples ($\mathcal{M}$ or $\mathcal{D}_t$) and model ($\theta_S$ or $\theta_W$) are utilized to evaluate FIM and whether it is adjusted $F^{adj}$. All the components contribute to the performance gains.

The ablation study shows that both synaptic consolidation and dual memory experience replay play a critical role in reducing forgetting. It is further noted that Mean-ER provides a significant performance improvement over typical ER. The method of synaptic consolidation according to the invention provides further performance gain and improves the stability of the model. Separately from the above the step of evaluating the Fisher information matrix using the semantic memory on the memory buffer instead of the working model on the current task training data provides an improved estimate of the importance of parameters for all encountered tasks. The study further also confirms that not accounting for the functional integrity of the convolution filter reduces performance. As such, the method may also separately from any of the before mentioned take this feature into account. This is compatible with all embodiments. Results further suggest that the selection of - more specialized - algorithms for calculating the parameter importance at the filter level instead of post-processing may further improve regularization. Importantly, merely plugging in regularization in Mean-ER (+oEWC) not only adds the reliance on task boundaries but is also detrimental to learning. oEWC (elastic weight consolidation) anchors the weights of the model to their state at the task boundary which over-constrains the model update and hampers knowledge consolidation. Furthermore, the importance estimates would in such case be biased towards the current task. The method according to claim 1 in addition to making the method suitable for general continual learning, enables knowledge consolidation by maintaining an updated estimate of parameter importance across the encountered tasks and anchoring the weights to the consolidated weights in the semantic memory. Lastly, the method does not require additional memory to save the reference weights. The invention, therefore, not only highlights the benefits of incorporating both experience replay and regularization in a dual-memory architecture, but also emphasizes the importance of design choices to enable consolidation as the de-facto combination is detrimental to knowledge consolidation.

**References:**

[1] Mehrdad Farajtabar, Navid Azizan, Alex Mott, and Ang Li. Orthogonal gradient descent for continual learning. In International Conference on Artificial Intelligence and Statistics, pages 3762-3773. PMLR, 2020

[2] James Kirkpatrick, Razvan Pascanu, Neil Rabinowitz, JoelVeness, Guillaume Desjardins, Andrei A Rusu, KieranMilan, John Quan, Tiago Ramalho, Agnieszka Grabska-Barwinska, et al. Overcoming catastrophic forgetting in neural networks. Proceedings of the national academy of sciences, 114(13):3521-3526, 2017

[3] Hippolyt Ritter, Aleksandar Botev, and David Barber. Online structured laplace approximations for overcoming catastrophic forgetting. In Advances in Neural Information Processing Systems, pages 3738-3748, 2018

[4] Friedemann Zenke, Ben Poole, and Surya Ganguli. Continual learning through synaptic intelligence. Proceedings of machine learning research, 70:3987, 2017

[5] Andrei A Rusu, Neil C Rabinowitz, Guillaume Desjardins,Hubert Soyer, James Kirkpatrick, Koray Kavukcuoglu, Raz-van Pascanu, and Raia Hadsell. Progressive neural networks. arXiv preprint arXiv:1606.04671, 2016

[6] Jaehong Yoon, Eunho Yang, Jeongtae Lee, and Sung JuHwang. Lifelong learning with dynamically expandable networks. arXiv preprint arXiv:1708.01547, 2017

[7] Arslan Chaudhry, Marc' Aurelio Ranzato, Marcus Rohrbach, and Mohamed Elhoseiny. Efficient lifelong learning with a-gem. arXiv preprint arXiv:1812.00420, 2018

[8] David Lopez-Paz and Marc' Aurelio Ranzato. Gradient episodic memory for continual learning. In Advances in neural information processing systems, pages 6467-6476, 2017

[9] Anthony Robins. Catastrophic forgetting, rehearsal and pseudorehearsal. Connection Science, 7(2):123-146, 1995

[10] Matthew Riemer, Ignacio Cases, Robert Ajemian, Miao Liu,Irina Rish, Yuhai Tu, and Gerald Tesauro. Learning to learn without forgetting by maximizing transfer and minimizing interference. arXiv preprint arXiv:1810.11910, 2018

[11] Sylvestre-Alvise Rebuffi, Alexander Kolesnikov, GeorgSperl, and Christoph H Lampert. icarl: Incremental classifier and representation learning. In Proceedings of the IEEE conference on Computer Vision and Pattern Recognition, pages2001-2010, 2017

[12] Rahaf Aljundi, Min Lin, Baptiste Goujaud, and Yoshua Bengio. Gradient based sample selection for online continual learning. In Advances in Neural Information Processing Systems, pages 11816-11825, 2019.

[13] Ari S Benjamin, David Rolnick, and Konrad Kording. Measuring and regularizing networks in function space. arXivpreprint arXiv:1805.08289, 2018

[14] Pietro Buzzega, Matteo Boschini, Angelo Porrello, DavideAbati, and Simone Calderara. Dark experience for general continual learning: a strong, simple baseline. arXiv preprintarXiv:2004.07211, 2020

[15] Sebastian Farquhar and Yarin Gal. Towards robust evaluations of continual learning. arXiv preprintarXiv:1805.09733, 2018

[16] Jeffrey S Vitter. Random sampling with a reservoir. ACM Transactions on Mathematical Software (TOMS), 11(1):37-57, 1985

[17] Antti Tarvainen and Harri Valpola. Mean teachers are better role models: Weight-averaged consistency targets improve semi-supervised deep learning results. arXiv preprintarXiv:1703.01780, 2017

[18] Jonathan Schwarz, Wojciech Czarnecki, Jelena Luketina, Agnieszka Grabska-Barwinska, Yee Whye Teh, Razvan Pascanu, and Raia Hadsell. Progress & compress: A scalable framework for continual learning. In International Conference on Machine Learning, pp. 4528-4537. PMLR, 2018.

[19] Arslan Chaudhry, Puneet K Dokania, Thalaiyasingam Ajanthan, and Philip HS Torr. Riemannian walk for incremental learning: Understanding forgetting and intransigence. In Proceedings of the European Conference on Computer Vision (ECCV), pp. 532-547, 2018a.

[20] Tyler L Hayes, Giri P Krishnan, Maxim Bazhenov, Hava T Siegelmann, Terrence J Sejnowski, and Christopher Kanan. Replay in deep learning: Current approaches and missing biological elements. Neural Computation, 33(11):2908-2950, 2021.

[21] Friedemann Zenke, Ben Poole, and Surya Ganguli. Continual learning through synaptic intelligence. In International Conference on Machine Learning, pp. 3987-3995. PMLR, 2017.

[22] Elahe Arani, Fahad Sarfraz, and Bahram Zonooz. Learning fast, learning slow: A general continual learning method based on complementary learning system. In International Conference on Learning Representations, 2021.

[23] Nitin Kamra, Umang Gupta, and Yan Liu. Deep generative dual memory network for continual learning. ArXiv preprint arXiv:1710.10368, 2017.

[24] Matthew P Walker and Robert Stickgold. Sleep-dependent learning and memory consolidation. Neuron, 44(1):121- 133, 2004.

[25] James L McClelland, Bruce L McNaughton, and Randall C O'Reilly. Why there are complementary learning systems in the hippocampus and neocortex: insights from the successes and failures of connectionist models of learning and memory. Psychological review, 102(3):419, 1995.

[26] Demis Hassabis, Dharshan Kumaran, Christopher Summerfield, and Matthew Botvinick. Neuroscience-inspired artificial intelligence. Neuron, 95(2):245-258, 2017.

[27] Jeffrey S Vitter. Random sampling with a reservoir. ACM Transactions on Mathematical Software (TOMS), 11(1):37-57, 1985.

[28] Giri P Krishnan, Timothy Tadros, Ramyaa Ramyaa, and Maxim Bazhenov. Biologically inspired sleep algorithm for artificial neural networks. arXiv preprint arXiv:1908.02240, 2019.

[29] Roger L Redondo and Richard GM Morris. Making memories last: the synaptic tagging and capture hypothesis.

Nature Reviews Neuroscience, 12(1):17-30, 2011.

**Terms:**

Importance may be understood as relative importance between synapses and/or parameters of filters, wherein importance is defined as a value, wherein more important synapse and/or parameters have a higher value than less important synapse or parameters with respect to each other. Parameters above a predefined threshold value may be considered important, while those at or below said threshold value may be considered unimportant.

Parameters of filters may comprise network weights.

To anchor may be understood as using elastic weight consolidation to slow down learning on a subset of weights, which are identified as being important or by slowing down learning on all weights proportional to, or as a function of, their relative importance.

Supervised task loss, also just supervised loss, may be seen as a standard cross-entropy loss, such as resulting from interleaving.

A logit is a quantile function associated with standard logistic distribution based on probability, such as of a sample.

A driver response may be accelerating, reducing speed, such as through breaking, steering, maintaining a predefined speed, switching lanes, and even activating and deactivating lights and blinkers. The person skilled in the art will understand this list not to be exhaustive.

**Claims**

1. A computer-implemented method of synaptic consolidation and dual memory experience replay for training a neural network associated with filters in convolutional layers, such as for processing an image, using a dual memory system comprising an episodic memory, and a semantic memory, wherein said method comprises the step of:

   - using a Fisher information matrix for estimating the importance of each synapse in the network to previous tasks of the neural network;
   - evaluating the Fisher information matrix on the episodic memory using the semantic memory, or on the semantic memory;

   wherein the neural network is updated using stochastic gradient descent using the gradients with respect to a loss function over the method.

2. The method according to claim 1 comprising:

   - adjusting the importance estimate whereby the importance of each filter is given by the mean importance of its parameters; and
   - using weights of the semantic memory as the anchor parameters for constraining an update of the synapses of the network based on the adjusted importance estimate.

3. The method according to any one of claims 1-2 comprising:

   - updating the aggregated fisher information matrix stochastically using exponential moving average of the fisher matrices evaluated throughout training; and
   - updating the semantic memory stochastically using exponential moving average of the neural network weights.

4. The method according to any one of claims 1-3 comprising

   - interleaving samples from a current task with samples from the episodic memory for performing the training.

5. The method according to any one of claims 2-4 wherein the loss function is a combined loss function comprising a supervised task loss, a consistency regularization loss and a synaptic consolidation loss

6. The computer-implemented method according to any one of claims 1-5, wherein the step of evaluating the aggregated Fisher information matrix comprises of evaluating the Fisher information matrix using the semantic memory on samples in the episodic memory using an exponential moving average to aggregate the Fisher matrix throughout the training.

7. The computer-implemented method according to claim 6, and wherein the step of adjusting the importance estimate of a filter comprises of using the mean of the parameters of a filter in the aggregated Fisher information matrix.

8. The computer-implemented method according to any one of claims 1-7, wherein constraining the parameters of the neural network comprises anchoring the parameters to the semantic memory weighted by the adjusted Fisher information matrix.

9. The computer-implemented method according to any one of claims 1-8, wherein the method step of evaluating the Fisher information matrix is performed stochastically to the exclusion of the use of task boundaries.

10. The computer-implemented method according to any one of claims 1-9, wherein the method step of updating the semantic memory comprises aggregating weights of the neural network stochastically using an exponential moving average.

11. The computer-implemented method according to any one of claims 1-10, wherein the semantic memory interacts with the episodic memory to provide replay logits for adding consistency regularization to the update of the neural network.

12. The computer-implemented method according to any one of claims 1-11, comprising the step of providing a data stream from a vehicle, such as comprising a life feed of images, to the network via the associated filters, and wherein outputs of the neural network are used as driver responses for autonomously piloting said vehicle.

13. An at least partially autonomous driving system comprising at least one camera designed for providing a feed of images, and a computer designed for implementing the method according to any one of claim 1-12, wherein the system is designed for using said feed of images for training the neural network, such as while driving, and wherein the network is designed for outputting driver responses for piloting the system in response to the feed of images.

14. A computer-readable storage medium comprising a program for executing the method according to any one of claims 1-12 on a computer.

15. A computer-implemented simulation of autonomous driving of a vehicle on a road, the method comprising:

>  - providing a data stream, such as a live feed of images;
>  - applying the method according to any one of claims 1-12, wherein the data stream is provided to the neural network and associated filters; and
>  - simulating a driver response to the data stream using outputs of said network.

## EUROPEAN SEARCH REPORT

Application Number

EP 22 17 4395

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ELAHE ARANI ET AL: "Learning Fast, Learning Slow: A General Continual Learning Method based on Complementary Learning System", ARXIV.ORG, CORNELL UNIVERSITY LIBRARY, 201 OLIN LIBRARY CORNELL UNIVERSITY ITHACA, NY 14853, 29 January 2022 (2022-01-29), XP091142247, * Sections 3.3 and 4; Algorithm 1; figure 1 * | 1-15 | INV. G06N3/04 G06N3/08 |
| A | JAMES KIRKPATRICK ET AL: "Overcoming catastrophic forgetting in neural networks", PROCEEDINGS OF THE NATIONAL ACADEMY OF SCIENCES, vol. 114, no. 13, 28 March 2017 (2017-03-28), pages 3521-3526, XP055412644, ISSN: 0027-8424, DOI: 10.1073/pnas.1611835114 * Sections "Results" and "Material and Methods" * | 1-15 | |

TECHNICAL FIELDS SEARCHED (IPC)

G06N

The present search report has been drawn up for all claims

| Place of search | Date of completion of the search | Examiner |
|---|---|---|
| The Hague | 11 November 2022 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Orthogonal gradient descent for continual learning. **MEHRDAD FARAJTABAR ; NAVID AZIZAN ; ALEX MOTT ; ANG LI.** International Conference on Artificial Intelligence and Statistics. PMLR, 2020, 3762-3773
- **JAMES KIRKPATRICK ; RAZVAN PASCANU ; NEIL RABINOWITZ ; JOELVENESS ; GUILLAUME DESJARDINS ; ANDREI A RUSU ; KIERANMILAN ; JOHN QUAN ; TIAGO RAMALHO ; AGNIESZKA GRABSKA-BARWINS-KA et al.** Overcoming catastrophic forgetting in neural networks. *Proceedings of the national academy of sciences,* 2017, vol. 114 (13), 3521-3526
- **HIPPOLYT RITTER ; ALEKSANDAR BOTEV ; DAVID BARBER.** Online structured laplace approximations for overcoming catastrophic forgetting. *Advances in Neural Information Processing Systems,* 2018, 3738-3748
- **FRIEDEMANN ZENKE ; BEN POOLE ; SURYA GANGULI.** Continual learning through synaptic intelligence. *Proceedings of machine learning research,* 2017, vol. 70, 3987
- **ANDREI A RUSU ; NEIL C RABINOWITZ ; GUILLAUME DESJARDINS ; HUBERT SOYER ; JAMES KIRKPATRICK ; KORAY KAVUKCUOGLU ; RAZ-VAN PASCANU ; RAIA HADSELL.** Progressive neural networks. *arXiv:1606.04671,* 2016
- **JAEHONG YOON ; EUNHO YANG ; JEONGTAE LEE ; SUNG JUHWANG.** Lifelong learning with dynamically expandable networks. *arXiv:1708.01547,* 2017
- **ARSLAN CHAUDHRY ; MARC' AURELIO RANZATO ; MARCUS ROHRBACH ; MOHAMED ELHOSEINY.** Efficient lifelong learning with a-gem. *arXiv:1812.00420,* 2018
- **DAVID LOPEZ-PAZ ; MARC' AURELIO RANZATO.** Gradient episodic memory for continual learning. *Advances in neural information processing systems,* 2017, 6467-6476
- **ANTHONY ROBINS.** Catastrophic forgetting, rehearsal and pseudorehearsal. *Connection Science,* 1995, vol. 7 (2), 123-146
- **MATTHEW RIEMER ; IGNACIO CASES ; ROBERT AJEMIAN ; MIAO LIU ; IRINA RISH ; YUHAI TU ; GERALD TESAURO.** Learning to learn without forgetting by maximizing transfer and minimizing interference. *arXiv:1810.11910,* 2018

- **SYLVESTRE-ALVISE REBUFFI ; ALEXANDER KOLESNIKOV ; GEORGSPERL ; CHRISTOPH H LAMPERT.** icarl: Incremental classifier and representation learning. *Proceedings of the IEEE conference on Computer Vision and Pattern Recognition,* 2017, 2001-2010
- **RAHAF ALJUNDI ; MIN LIN ; BAPTISTE GOUJAUD ; YOSHUA BENGIO.** Gradient based sample selection for online continual learning. *Advances in Neural Information Processing Systems,* 2019, 11816-11825
- **ARI S BENJAMIN ; DAVID ROLNICK ; KONRAD KORDING.** Measuring and regularizing networks in function space. *arXiv:1805.08289,* 2018
- **PIETRO BUZZEGA ; MATTEO BOSCHINI ; ANGE-LO PORRELLO ; DAVIDEABATI ; SIMONE CAL-DERARA.** Dark experience for general continual learning: a strong, simple baseline. *arXiv:2004.07211,* 2020
- **SEBASTIAN FARQUHAR ; YARIN GAL.** Towards robust evaluations of continual learning. *arXiv:1805.09733,* 2018
- **JEFFREY S VITTER.** Random sampling with a reservoir. *ACM Transactions on Mathematical Software (TOMS),* 1985, vol. 11 (1), 37-57
- **ANTTI TARVAINEN ; HARRI VALPOLA.** Mean teachers are better role models: Weight-averaged consistency targets improve semi-supervised deep learning results. *arXiv:1703.01780,* 2017
- Progress & compress: A scalable framework for continual learning. **JONATHAN SCHWARZ ; WO-JCIECH CZARNECKI ; JELENA LUKETINA ; AG-NIESZKA GRABSKA-BARWINSKA ; YEE WHYE TEH ; RAZVAN PASCANU ; RAIA HADSELL.** International Conference on Machine Learning. PMLR, 2018, 4528-4537
- **ARSLAN CHAUDHRY ; PUNEET K DOKANIA ; THALAIYASINGAM AJANTHAN ; PHILIP HS TORR.** Riemannian walk for incremental learning: Understanding forgetting and intransigence. *Proceedings of the European Conference on Computer Vision (ECCV),* 2018, 532-547
- **TYLER L HAYES ; GIRI P KRISHNAN ; MAXIM BAZHENOV ; HAVA T SIEGELMANN ; TER-RENCE J SEJNOWSKI ; CHRISTOPHER KANAN.** Replay in deep learning: Current approaches and missing biological elements. *Neural Computation,* 2021, vol. 33 (11), 2908-2950

- Continual learning through synaptic intelligence. **FRIEDEMANN ZENKE ; BEN POOLE ; SURYA GANGULI.** International Conference on Machine Learning. PMLR, 2017, 3987-3995
- **ELAHE ARANI ; FAHAD SARFRAZ ; BAHRAM ZONOOZ.** Learning fast, learning slow: A general continual learning method based on complementary learning system. *International Conference on Learning Representations,* 2021
- **NITIN KAMRA ; UMANG GUPTA ; YAN LIU.** Deep generative dual memory network for continual learning. *arXiv:1710.10368,* 2017
- **MATTHEW P WALKER ; ROBERT STICKGOLD.** Sleep-dependent learning and memory consolidation. *Neuron,* 2004, vol. 44 (1), 121-133
- **JAMES L MCCLELLAND ; BRUCE L MCNAUGHTON ; RANDALL C O'REILLY.** Why there are complementary learning systems in the hippocampus and neocortex: insights from the successes and failures of connectionist models of learning and memory. *Psychological review,* 1995, vol. 102 (3), 419
- **DEMIS HASSABIS ; DHARSHAN KUMARAN ; CHRISTOPHER SUMMERFIELD ; MATTHEW BOTVINICK.** Neuroscience-inspired artificial intelligence. *Neuron,* 2017, vol. 95 (2), 245-258
- **JEFFREY S VITTER.** Random sampling with a reservoir. *ACM Transactions on Mathematical Software (TOMS),* 1985, vol. 11 (1), 37-57
- **GIRI P KRISHNAN ; TIMOTHY TADROS ; RAMYAA RAMYAA ; MAXIM BAZHENOV.** Biologically inspired sleep algorithm for artificial neural networks. *arXiv:1908.02240,* 2019
- **ROGER L REDONDO ; RICHARD GM MORRIS.** Making memories last: the synaptic tagging and capture hypothesis. *Nature Reviews Neuroscience,* 2011, vol. 12 (1), 17-30